Europäisches Patentamt

European Patent Office

Office européen des brevets

(11) Veröffentlichungsnummer: **0 237 945 B1**

# EUROPÄISCHE PATENTSCHRIFT

(45) Veröffentlichungstag der Patentschrift: **06.11.91**

(51) Int. Cl.⁵: **G11B 7/24**

(21) Anmeldenummer: **87103524.2**

(22) Anmeldetag: **11.03.87**

(54) Optisches Aufzeichnungsmedium.

(30) Priorität: **12.03.86 DE 3608267**

(43) Veröffentlichungstag der Anmeldung:
**23.09.87 Patentblatt 87/39**

(45) Bekanntmachung des Hinweises auf die
Patenterteilung:
**06.11.91 Patentblatt 91/45**

(84) Benannte Vertragsstaaten:
**CH DE FR GB IT LI NL**

(56) Entgegenhaltungen:
**US-A- 3 816 237**

**I. E. C. PRODUCT RESEARCH & DEVELOP-
MENT Band 24, Nr. 2, Juni 1985, Seiten 188 -
196.**

**PHYSICA Band 127B, 1984, Seiten 90 - 94**

**PATENT ABSTRACTS OF JAPAN Band 4, Nr.
31 (P-2) (513), 18.03.1980.**

(73) Patentinhaber: **BASF Aktiengesellschaft
Carl-Bosch-Strasse 38
W-6700 Ludwigshafen(DE)**

(72) Erfinder: **Werner, Arend, Dr.
Kurbrunnenstrasse 26
W-6702 Bad Duerkheim(DE)**
Erfinder: **Hibst, Hartmut,Dr.
Sternstr.215
W-6700-Ludwigshafen(DE)**
Erfinder: **Petermann, Juergen, Prof. Dr.
Westpreussenweg 12
W-2150 Buxtehude(DE)**

## Beschreibung

Die Erfindung betrifft optische Aufzeichnungsmedien, welche im wesentlichen aus einem polymeren Trägermaterial sowie einem darauf aufgebrachten Metallfilm hoher Reflektivität bestehen und bei denen die Aufzeichnung und Wiedergabe der Informationen mittels energiereicher Strahlung erfolgt.

Das Aufzeichnen von Informationen auf einem mit einer Speicherschicht versehenen Träger mittels eines in Abhängigkeit der zu speichernden Information in seiner Intensität oder Strahlbreite variierten Energiestrahls, bei dem der Schichtträger an den vom Energiestrahl getroffenen Stellen der Schicht freigelegt wird, ist seit längerer Zeit bekannt (DE-AS 12 77 344).

Eine derzeit vielfach untersuchte Variante der otptischen Speicherung basiert auf einer solchen Bildung von Löchern in einem Metallfilm hoher Reflektivität. Diese Marken (Löcher) haben gegenüber ihrer Umgebung eine geringere Reflektivität, nämlich die Reflektivität des Substrates und können daher durch Abtastung mit einem Laser registriert werden. Zur Erzeugung der Marken wird das schichtbildende Material mit einem Laser bestrahlt, dessen Leistung deutlich höher als die des Leselasers ist. Als Folge davon erwärmt sich die Schicht und das Schichtmaterial verdampft oder schmilzt im bestrahlten Bereich. In beiden Fällen bildet sich ein Loch als geschriebene Marke. Als Schichtmaterialien werden vor allem Te, Bi und In, sowie deren Verbindungen benutzt (u.a. A. Huiper, Physica 127 B, S. 90-94 (1984)). Diese Materialien werden durch Hochvakuumbedampfung oder Kathodenzerstäubung auf Glas- bzw. Kunststoffusbtrate aufgebracht.

Eine sich davon unterscheidende Methode der optischen Speicherung nutzt die unterschiedliche Reflektivität von Schichten bei ihrem Übergang vom amorphen zum kristallinen Zustand. Auch diese Speichermethode wird auf energiereicher Strahlung durchgeführt, deren Energie jedoch nicht ausreicht, in die Speicherschicht Löcher einzuprägen. Ein Vorteil der meist auf der Basis von Tellur- und/oder Selen-Schichten wirksamen Speichermedien ist die Möglichkeit reversibel zu arbeiten. Dieses Prinzip ist ebenfalls bereits bekannt (u.A. DE-OS 32 04 076).

Die Schichten können nun entweder polykristallin oder amorph abgeschieden werden. Auf den üblicherwiese verwendeten Glas- bzw. Kunststoffschichten wachsen die Kristallite mit beliebigen von Kristallit zu Kristallit unterschiedlichen Orientierungen auf. Die polykristalline Modifikation hat den Vorteil der hohen Schreibempfindlichkeit. Da die unterschiedlichen Kristallflächen dieser Materialien aber unterschiedliche Reflektivitäten aufweisen und unterschiedlich schnell während der Beschichtung wachsen, liefert eine polykristalline Schicht mit beliebiger kristallographischer Ausrichtung der Kristallite einen hohen Beitrag zum Rauschen. Dieser Nachteil kann durch Verwendung amorpher Schichten verbessert werden, aber nur mit dem Nachteil einer Herabsetzung der Schreibempfindlichkeit.

Aufgabe der Erfindung war es daher, optische Aufzeichnungsmedien bereitzustellen, welche sowohl hinsichtlich ihrer Schreibempfindlichkeit als auch des Rauschpegels eine Verbesserung aufweisen.

Es wurde nun überraschenderweise gefunden, daß optische Aufzeichnungsmedien der eingangs geschilderten Art die aufgabengemäßen Verbesserungen aufweisen, wenn das polymere Trägermaterial ein uniaxial orientierter Kunststoffilm ist und der darauf abgeschiedene polykristalline Metallfilm eine einheitliche kristallographische Ausrichtung der Kristallite entsprechend der Orientierung des Trägermaterials aufweist.

Mit Hilfe des erfindungsgemäßen optischen Aufzeichnungsträgers ist es möglich, den für die Schreibempfindlichekti derartiger Medien vorteilhaften Einsatz von polykristallinen Schichten mit einer Verbesserung des Rauschpegels, welche durch die einheitliche kristallographische Ausrichtung der Kristallite bewirkt wird, zu verbinden. Die so charakterisierten optischen Aufzeichnungsträger lassen sich für beide Aufzeichnungsprinzipien verwenden, sowohl für die ablative Aufzeichnungsmethode als auch für die reversible durch Phasenübergang kristallin/amorph.

Das für die erfindungsgemäßen Aufzeichnungsträger geeignete polymere Trägermaterial besteht aus uniaxial orientierten Kunststoffilmen, wie z.B. Polyethylen, Polypropylen, Polybuten-1 oder isotaktisches Polystyrol. Diese Stoffe können in Form dünner Folien oder auch als plattenförmige Substrate eingesetzt werden. Erhalten werden sie durch Festkörperpolymerisation, durch kaltes Verstrecken oder durch Orientieren des Polymeren aus der Schmelze. Eine wesentliche Eigenschaft dieser uniaxial orientierten Trägermaterialien ist ihr semi- oder vollkristalliner Aufbau. In einer zweckmäßigen Ausgestaltung des Erfindungsgegenstandes besteht das Trägermaterial aus einem für optische Aufzeichnungsträger üblichen Basismaterial, wie z.B. Polymethylmethacrylat (PMMA) und dem darauf aufgebrachten uniaxial orientierten Polymerfilm.

Auf derartige Trägermaterialien werden nun die Metallfilme aufgebracht. Hierzu werden insbesondere Zinn, Tellur, Wismut oder Indium mittels PVD-Technik, z.B. durch Aufdampfen in einem Vakuum von besser $10^{-5}$ mbar, auf dem Träger abgeschieden. Dabei schlagen sich die Metalle epitaktisch auf dem uniaxial orientierten Trägermaterial nieder. Die dichtest gepackten kristallographischen Richtungen verlaufen dabei parallel zur Kettenrichtung der Polymerfilme. Eine Gitterpassung zwischen Polymer- und Metallgitter ist

2

nicht erforderlich. Die Epitaxie der abgeschiedenen Metallfilme wird mittels Elektronenstrahlbeugung bestimmt. Der orientierte Aufbau der Metallschicht auf dem uniaxialen Trägermaterial sei beispielhaft an einer Auswahl in der Tabelle wiedergegeben. Dabei steht der Ausdruck K für die Orientierung der Kristallebene der Metallschicht zur uniaxialen Vorzugsrichtung des Trägermaterials.

## Tabelle

| Uniaxial orientiertes | | Metallschicht | | | |
|---|---|---|---|---|---|
| Trägermaterial | | Sn (tert) | Te (hex) | Bi (hex) | In (tert) |
| Polyethylen | Epitaxie K | stark [c] ∥ [100] | stark [c] ∥ [001] | stark [c] ∥ [102] | – |
| Polypropylen | Epitaxie K | sehr stark [c] ∥ [100] | stark [c] ∥ [001] | sehr stark [c] ∥ [102] | schwach [c] ∥ [101] |
| Polybuten-1 | Eptaxie K | sehr stark [c] ∥ [100] | sehr stark [c] ∥ [001] | sehr stark [c] ∥ [102] | stark [c] ∥ [101] |

### Beispiel

Ein PMMA-Substrat wird mit einer dünnen Polybuten-1-Folie belegt. In einer Hochvakuumverdampfungsanlage wird die Folie bei $p = 10^{-5}$ mbar mit einer 30 nm dicken Te-Schicht bedampft. Untersuchungen mit dem Transmissionselektronenmikroskop zeigen eine deutliche Textur: die C-Achse der hexagonalen Te-Kristallite liegt in der Schichtebene, und zwar parallel zu den Molekülketten der Polybuten-1-Folie. Schreib-Lese-Versuche mit einem Halbleiterlaser (820 nm) zeigen eine Verbesserung des Rauschpegels.

### Patentansprüche

1. Optisches Aufzeichnungsmedium zum Aufzeichnen und Wiedergeben von Informationen mittels energiereicher Strahlung, im wesentlichen bestehend aus einem polymeren Trägermaterial und einem darauf aufgebrachten Metallfilm hoher Reflektivität, dadurch gekennzeichnet, daß das polymere Trägermaterial ein uniaxial orientierter Kunststofffilm ist und der darauf abgeschiedene polykristalline Metallfilm eine einheitliche kristallographische Ausrichtung der Kristallite entsprechend der Orientierung des Trägermaterials aufweist.

2. Optischer Aufzeichnungsträger gemäß Anspruch 1, dadurch gekennzeichnet, daß das Trägermaterial aus einer polymeren Basis und einer uniaxial orientierten polymeren Oberflächenschicht besteht.

3. Optischer Aufzeichnungsträger gemäß einem der Ansprüche 1 und 2, dadurch gekennzeichnet, daß die Metalle der aufgedampften Schicht Zinn, Tellur oder Wismut sind.

### Claims

1. An optical recording medium for recording and retrieving information by means of high energy radiation, essentially consisting of a polymeric base and, applied on this, a metal film of high reflectivity, wherein the polymeric base is an uniaxially oriented plastic film and the polycrystalline metal film deposited on this has a uniform crystallographic orientation of the crystallites corresponding to the orientation of the base.

2. An optical recording medium as claimed in claim 1, wherein the base consists of a polymeric substrate and a uniaxially oriented polymeric surface layer.

3. An optical recording medium as claimed in either of claims 1 and 2, wherein the metals of the layer deposited by vapor deposition are tin, tellurium or bismuth.

**Revendications**

1. Milieu d'enregistrement optique pour l'enregistrement et la reproduction d'informations au moyen d'un rayonnement riche en énergie, constitué essentiellement d'un matériau support polymère et d'une pellicule métallique à pouvoir réflecteur élevé, caractérisé par le fait que le matériau support polymère est une pellicule de matière plastique orientée uniaxialement et que la pellicule métallique polycristalline déposée dessus présente une orientation cristallographique uniforme des cristallites correspondant à l'orientation du matériau support.

2. Support d'enregistrement optique selon la revendication 1, caractérisé par le fait que la matériau support est constitué par une base polymère et une couche de surface polymère orientée uniaxialement.

3. Support d'enregistrement optique selon l'une des revendications 1 ou 2, caractérisé par le fait que la couche appliquée par vaporisation est formée par les métaux étain, tellure ou bismuth.